Europäisches Patentamt

European Patent Office

Office européen des brevets

(11) Veröffentlichungsnummer : **0 094 109 B1**

# (12) EUROPÄISCHE PATENTSCHRIFT

(45) Veröffentlichungstag der Patentschrift :
05.03.86

(21) Anmeldenummer : 83200484.0

(22) Anmeldetag : 06.04.83

(51) Int. Cl.⁴ : **B 66 B   1/28**, H 02 P   5/40

(54) **Antriebssteuerung für einen Aufzug.**

(30) Priorität : 03.05.82 CH 2688/82

(43) Veröffentlichungstag der Anmeldung :
16.11.83 Patentblatt 83/46

(45) Bekanntmachung des Hinweises auf die Patenterteilung : 05.03.86 Patentblatt 86/10

(84) Benannte Vertragsstaaten :
AT BE DE FR GB IT NL

(56) Entgegenhaltungen :
CH-A-   446 492
CH-A-   525 585
US-A- 3 678 355
US-A- 3 908 156
US-A- 4 052 651
US-A- 4 072 212
US-A- 4 213 517

(73) Patentinhaber : INVENTIO AG
Seestrasse 55
CH-6052 Hergiswil NW (CH)

(72) Erfinder : Kindler, Gerhard
Baumschulweg 16
CH-6045 Meggen (CH)

Jouve, 18, rue St-Denis, 75001 Paris, France

## Beschreibung

Die Erfindung betrifft eine Antriebssteuerung für einen Aufzug mit einem Hubmotor, der mit einer Wirbelstrombremse und einem Tachometer gekuppelt ist, wobei die Antriebssteuerung einen Sollwertgeber und einen Regler aufweist, welcher eingangsseitig mit dem Tachometer, und ausgangsseitig mit einem Stellglied für die Steuerung des Antriebsdrehmomentes des Hubmotors sowie mit einem Stellglied für die Steuerung des Bremsdrehmomentes der Wirbelstrombremse verbunden ist, und wobei der Sollwertgeber für die Beschleunigung einen zunehmenden und für die Verzögerung einen abnehmenden Sollwert erzeugt und der Fahrtverlauf des Aufzuges abhängig von der dem Regler zugeführten, aus der Differenz des Sollwertes und des vom Tachometer erzeugten Istwertesgebildeten Regelabweichung regelbar ist.

Bei einer ähnlich konzipierten Antriebssteuerung nach der Schweizer Patentschrift 324 296 wird der Fahrtverlauf lediglich während der Verzögerungsphase zum Zwecke einer genauen Direkteinfahrt geregelt, wohingegen die übrigen Phasen der Fahrt ungeregelt verlaufen. Bei Einleitung der Verzögerungsphase wird der Hubmotor abgeschaltet und der Sollwertgeber gestartet. Die vom Sollwertgeber erzeugte wegabhängige Sollwertspannung wird der vom Tachometerdynamo erzeugten Istwertspannung entgegengeschaltet und die daraus resultierende Spannungsdifferenz dem Eingang des aus einem Verstärker bestehenden Reglers zugeführt. Der Regler ist ausgangsseitig mit einem den Erregerstrom der Wirbelstrombremse bei Auftreten einer negativen Regelabweichung steuernden Stellglied in Form eines Thyratrongleichrichters verbunden. Um den Fahrtverlauf während der Beschleunigungsphase zu verbessern, werden bei derartigen Antriebssteuerungen die als Hubmotoren verwendeten Asynchronmotoren mit einer Anlaufwicklung ausgestattet. So kann, wie beispielsweise in der Schweizer Patentschrift 437 698 beschrieben, der Hubmotor polumschaltbar mit sechs und vier Polen ausgeführt werden, wobei der Anlauf mit der grossen Polzahl erfolgt und bei Erreichen einer bestimmten Geschwindigkeit auf die kleine Polzahl umgeschaltet wird.

Bei vorstehend beschriebener Antriebssteuerung verläuft der Fahrtverlauf mit Ausnahme der Verzögerungsphase unkontrolliert, so dass im Hinblick auf den von Ruck- und Beschleunigungswerten abhängigen Fahrkomfort sowie die Zeitdauer einer Fahrt keine optimalen Ergebnisse erzielt werden. Ein weiterer Nachteil ist darin zu sehen, dass bei dieser Steuerung die Bremswege kleiner als die kleinste Stockwerkdistanz sein müssen, was unter Berücksichtigung noch zulässiger Verzögerungswerte zu kleinen Nennfahrgeschwindigkeiten führt.

Mit der Schweizer Patentschrift 334 420 ist eine Antriebssteuerung gemäss Oberbegriff bekannt geworden, bei der ein als Hubmotor verwendeter Asynchronmotor über eine Wirbelstromkupplung mit der Aufzugswinde sowie der Wirbelstrombremse und dem Tachometerdynamo gekuppelt ist. Die Erregerwicklung der Wirbelstromkupplung ist im Arbeitskreis eines als Stellglied für die Steuerung des Antriebsdrehmomentes dienenden Thyratrongleichrichters angeordnet. Die Erregerwicklung der Wirbelstrombremse liegt im Arbeitskreis eines als Stellglied für die Steuerung des Bremsdrehmomentes dienenden weiteren Thyratrongleichrichters. Die Steuerstromkreise der Thyratrongleichrichter sind mit den Ausgängen eines Reglers derart verbunden, dass die Erregerströme der Kupplung und der Bremse gegenläufig gesteuert werden. Der aus einem Verstärker mit einer Pentode bestehende Regler arbeitet dabei in der Weise, dass während der Beschleunigungsphase das Antriebsdrehmoment zunehmend in Abhängigkeit von der positiven Regelabweichung und während der Verzögerungsphase das Bremsdrehmoment zunehmend in Abhängigkeit von der negativen Regelabweichung gesteuert wird. Die vom Sollwertgeber erzeugten Sollwertspannungen werden an einem Kondensator abgegriffen, wobei der Beschleunigungssollwert beim Laden und der Verzögerungssollwert beim Entladen gebildet wird.

Vorstehend beschriebene Antriebssteuerung weist einige Nachteile auf. So werden beispielsweise durch die Wirbelstromkupplung die Anlagekosten erheblich verteuert und mehr Platz beansprucht. Auch genügt die Regelung während der Verzögerungsphase mittels eines zeitabhängigen Sollwertes den an moderne Aufzüge gestellten Anforderungen bezüglich genaue Direkteinfahrt nicht mehr. Ein weiterer Nachteil liegt darin, dass während der Beschleunigungs- und Verzögerungsphase sowohl das Antriebsmoment als auch das Bremsmoment wirksam sind, wodurch zusätzlich Energie verbraucht wird.

Bei einer anderen bekannten Antriebssteuerung nach der Deutschen Patentschrift 23 40 930 werden diese Nachteile teilweise vermieden. Hierbei wird für die Steuerung des Antriebsdrehmomentes wie an sich bekannt, die Wicklung des direkt mit der Wirbelstrombremse und dem Tachometerdynamo gekuppelten Hubmotors über ein aus Thyristoren bestehendes Stellglied gespeist, wobei die Thyristoren mittels Zündwinkelsteuerung steuerbar sind. Der Sollwertgeber erzeugt für die Beschleunigungsphase eine zeitabhängige, zunehmende Sollwertspannung und für die Verzögerungsphase eine wegabhängige, abnehmende Sollwertspannung. Der Drehzahlregelkreis des Hubmotores weist für mindestens zwei Phasen je einen Regler auf. Der Drehzahlregelkreis der Wirbelstrombremse weist einen weiteren Regler auf, dessen Ausgang unmittelbar mit einem aus einem steuerbaren Thyristorgleichrichter bestehenden Stellglied der Wirbelstrombremse verbunden ist. Allen drei Reglern wird eingangsseitig die Sollwertspannung und die vom Tachometerdynamo erzeugte Istwertspannung zugeführt.

Ein Nachteil dieser Antriebssteuerung ist darin zu sehen, dass bei einer trägen Regelstrecke, wie sie eine Wirbelstrombremse darstellt, relativ grosse Verzögerungen auftreten, wodurch die Stabilität des Regelkreises verschlechtert wird. Weitere Nachteile liegen darin, dass für die Drehzahlregelung des Hubmotors und der Wirbelstrombremse mindestens drei Regler erforderlich sind und dass der vorgesehene Sollwertgeber während der Beschleunigungsphase einen zeitabhängigen Sollwert abgibt, so dass keine optimale Gesamtfahrkurve erzielbar ist.

Die der Erfindung zugrunde liegende Aufgabe besteht darin, zwecks Behebung vorstehend beschriebener Nachteile das dynamische Verhalten mindestens des Regelkreises der Wirbelstrombremse zu verbessern und beide Regelkreise in ihrem statischen und dynamischen Verhalten einander anzugleichen, so dass für die Drehzahlregelung des Hubmotors und der Wirbelstrombremse ein gemeinsamer Regler verwendet werden kann, wobei unter Anwendung eines optimale Sollwerte erzeugenden Sollwertgebers eine optimale Gesamtfahrkurve erzielbar ist.

Diese Aufgabe wird erfindungsgemäss mit den Merkmalen des Anspruches 1 gelöst.

Hierbei wird dem Drehzahlregelkreis der Wirbelstrombremse ein Stromregelkreis zur Regelung des Erregerstromes der Wirbelstrombremse unterlagert und die Ausgangsgrösse des Reglers während der Verzögerungsphase als Sollwert einem weiteren Regler über ein Linearisierungsglied zugeführt.

Während der Beschleunigungsphase wird die Ausgangsgrösse des Reglers einem den Drehmomentenverlauf zeitlich angenähert an den Drehmomentenverlauf der Verzögerungsphase anpassenden Anpassungsglied zugeführt, wobei der Ausgang des Anpassungsgliedes über ein weiteres Linearisierungsglied mit dem Stellglied des Hubmotors verbunden ist. Der vorgesehene Sollwertgeber erzeugt eine Sollfahrkurve, welcher sowohl für die Beschleunigungsphase als auch für die Verzögerungsphase optimale Ruck- und Beschleunigungsbeträge zugrunde gelegt sind.

Die mit der Erfindung erzielten Vorteile sind im wesentlichen darin zu sehen, dass bei der Regelung insbesondere der Wirbelstrombremse Verzögerungen ausgeschaltet werden und somit die Stabilität verbessert wird, und dass durch die vorgeschlagenen Linearisierungsglieder und das Anpassungsglied beide Regelkreise in ihrem statischen und dynamischen Verhalten einander angeglichen werden, so dass für beide Regelkreise ein gemeinsamer Regler verwendet werden kann. Durch die Linearisierung der Beziehungen zwischen Regler- und Streckenausgang wird annähernd die Charakteristik eines Gleichstrom-Nebenschlussmotors erreicht. Ein weiterer Vorteil ist darin zu sehen, dass mit dem vorgeschlagenen Sollwertgeber unter Berücksichtigung von Ruck-und Beschleunigungsgrenzwerten, die noch einen guten Fahrkomfort gewährleisten, minimale Gesamtfahrzeiten erzielt werden können.

Im folgenden wird die Erfindung an Hand eines auf der Zeichnung dargestellten Ausführungsbeispieles näher erläutert. Es zeigen :

Figur 1 eine schematische Darstellung der erfindungsgemässen Antriebssteuerung,

Figur 2 einen Regler eines Drehzahlregelkreises der Antriebssteuerung gemäss Fig. 1,

Figur 3 ein Anpassungsglied des Hubmotor-Drehzahlregelkreises der Antriebssteuerung gemäss Fig. 1,

Figur 4 ein Diagramm der Reglerausgangsspannung $u_1$ sowie des Drehmomenten- und Drehzahlverlaufes TA, $n_{IST}$ des Hubmotores während einer Beschleunigungsphase, ohne das Anpassungsglied gemäss Fig. 3,

Figur 5 ein Diagramm der Reglerausgangsspannung $u_1$ sowie des Drehmoment- und Drehzahlverlaufes TA, $n_{IST}$ des Hubmotores während einer Beschleunigungsphase, mit dem Anpassungsglied gemäss Fig. 3,

Figur 6 ein Diagramm der Reglerausgangsspannung $u_4$ sowie des Bremsmoment- und Drehzahlverlaufes TMB, $n_{IST}$ der Wirbelstrombremse während einer Verzögerungsphase,

Figur 7 ein Diagramm des Drehmomentenverlaufes TA des Hubmotors in Abhängigkeit von der Reglerausgangsspannung $u_1$ bei linearisierter Strecke, mit der Drehzahl n als Parameter,

Figur 8 ein Diagramm des Bremsmomentverlaufes TMB der Wirbelstrombremse in Abhängigkeit von der Reglerausgangsspannung $u_4$ bei linearisierter Strecke, mit der Drehzahl n als Parameter,

Figur 9 ein Diagramm des Bremsmomentverlaufes TMB der Wirbelstrombremse in Abhängigkeit von der Reglerausgangsspannung $u_4$ bei nichtlinearisierter Strecke, mit der Drehzahl n als Parameter,

Figur 10 einen Zweipunktregler eines dem Drehzahlregelkreis der Wirbelstrombremse unterlagerten Stromreglkreises,

Figur 11 eine Triggerschaltung des Stellgliedes des Stromregelkreises,

Figur 12 je ein Diagramm des Spannungs- und Stromverlaufes $U_G$, $I_{IST}$ der Erregerwicklung der Wirbelstrombremse, der Ausgangsspannung $U_R$ des Zweipunktreglers und der Kondensatorspannung $U_C$ für das Triggern von Zündimpulsen.

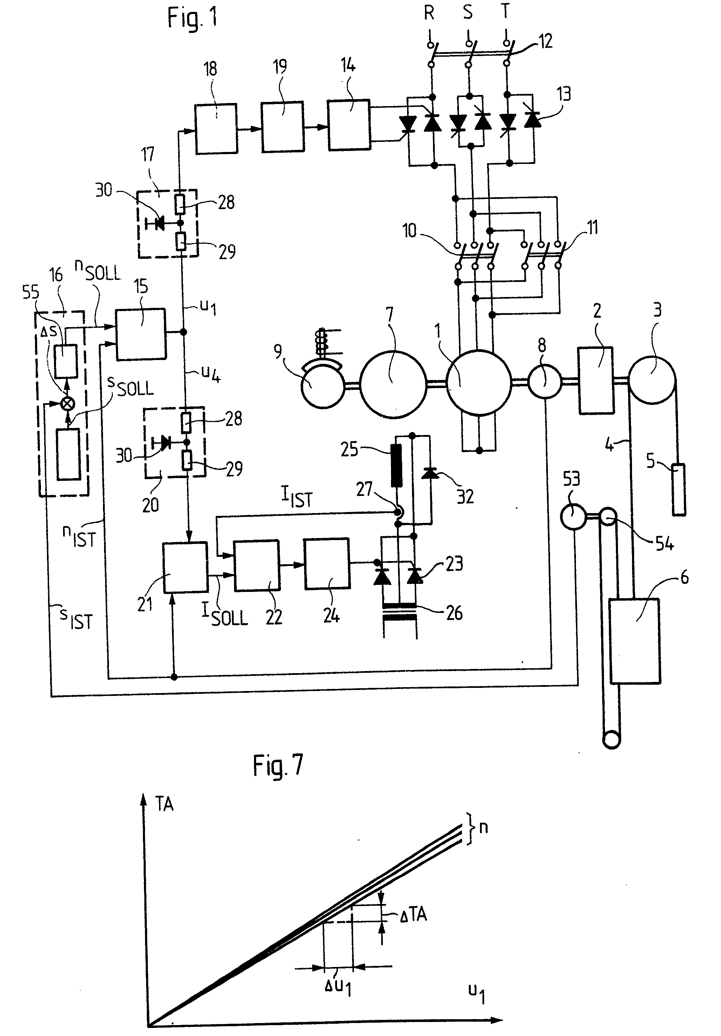

In der Fig. 1 ist mit 1 der Hubmotor eines Aufzuges bezeichnet, welcher über ein Getriebe 2 und eine Treibscheibe 3 eine an einem Förderseil 4 aufgehängte, über ein Gegengewicht 5 ausbalancierte Aufzugskabine 6 antreibt. Der Hubmotor 1, beispielsweise ein Asynchronmotor, ist mit einer Wirbelstrombremse 7, einem Tachometerdynamo 8 und der Bremstrommel 9 einer elektromechanischen Haltebremse gekuppelt und über Kontakte 10, 11 eines Fahrtrichtungsschützes und Kontakte 12 eines Hauptschützes an einem Drehstromnetz RST angeschlossen.

Zwischen den Kontakten 10, 11 des Fahrtrichtungsschützes und den Kontakten 12 des Hauptschützes sind in jeder Phase antiparallel geschaltete Thyristoren 13 angeordnet. Die Steuerelektroden der Thyristoren 13 sind mit den Ausgängen einer Zündwinkelsteuerung 14 verbunden. Die Thyristoren 13 und die Zündwinkelsteuerung 14 bilden das Stellglied eines Drehzahlregelkreises des Hubmotors 1.

Der Drehzahlregelkreis des Hubmotors 1 weist einen Regler 15 auf, dessen Eingang mit dem Ausgang eines Sollwertgebers 16 und dem Tachometerdynamo 8 zwecks Zuführung des Drehzahlsoll- und -istwertes $n_{SOLL}$, $n_{IST}$ verbunden ist, und dessen Ausgang über eine Sperrglied 17, ein Anpassungsglied 18 und ein Linearisierungsglied 19 mit dem Stellglied 13, 14 des Hubmotors 1 in Verbindung steht.

Der Regler 15 ist ferner einem Drehzahlregelkreis der Wirbelstrombremse 7 zugeordnet, wobei sein Ausgang über ein weiteres Sperrglied 20, ein weiteres Linearisierungsglied 21 und einen Zweipunktregler 22 mit einem Stellglied der Wirbelstrombremse 7 verbunden ist. Das Stellglied der Wirbelstrombremse 7 besteht aus zwei Thyristoren 23 und einer Zündimpulse erzeugenden Triggerschaltung 24, deren Ausgang mit den Steuerelektroden der Thyristoren 23 verbunden ist. Die Thyristoren 23, eine Erregerwicklung 25 der Wirbelstrombremse 7 und die Sekundärwicklung eines Speisetransformators 26 sind in Mittelpunktschaltung miteinander verknüpft, so dass beim Anlegen einer Wechselspannung an die Primärwicklung des Speisetransformators 26 an der Erregerwicklung 25 eine pulsierende Gleichspannung $U_G$ auftritt. Mit 32 ist eine parallel zur Erregerwicklung 25 geschaltete Diode bezeichnet, die bei gesperrten Thyristoren 23 einen Stromfluss durch die Erregerwicklung 25 ermöglicht. Der Zweipunktregler 22, das Stellglied 23, 24 und die Erregerwicklung 25 bilden einen Stromregelkreis, der dem Drehzahlregelkreis der Wirbelstrombremse 7 unterlagert ist. Hierbei wird die Ausgangsspannung des Reglers 15 dem Zweipunktregler 22 als Stromsollwert $I_{SOLL}$, und der Strom der Erregerwicklung 25 über einen Stromwandler 27 dem Zweipunktregler 22 als Stromistwert $I_{IST}$ zugeführt.

Die Sperrglieder 17, 20 bestehen aus je einem aus zwei Widerständen 28, 29 gebildeten Spannungsteiler und je einer Diode 30. Bei dem einen Sperrglied 17 ist die Mittelanzapfung des Spannungsteilers 28, 29 mit der Anode der Diode 30 und bei dem anderen Sperrglied 20 mit der Kathode der Diode 30 verbunden, so dass bei positiver Ausgangsspannung $u_4$ des Reglers 15 die Regelung des Hubmotors 1 und bei negativer Ausgangsspannung $u_1$ die Regelung der Wirbelstrombremse 7 gesperrt ist.

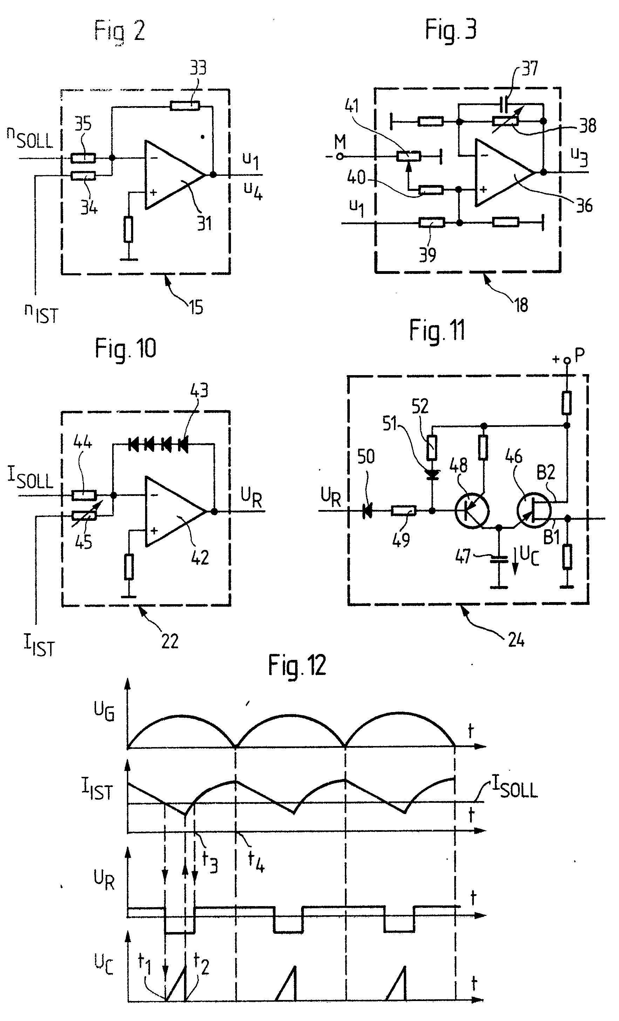

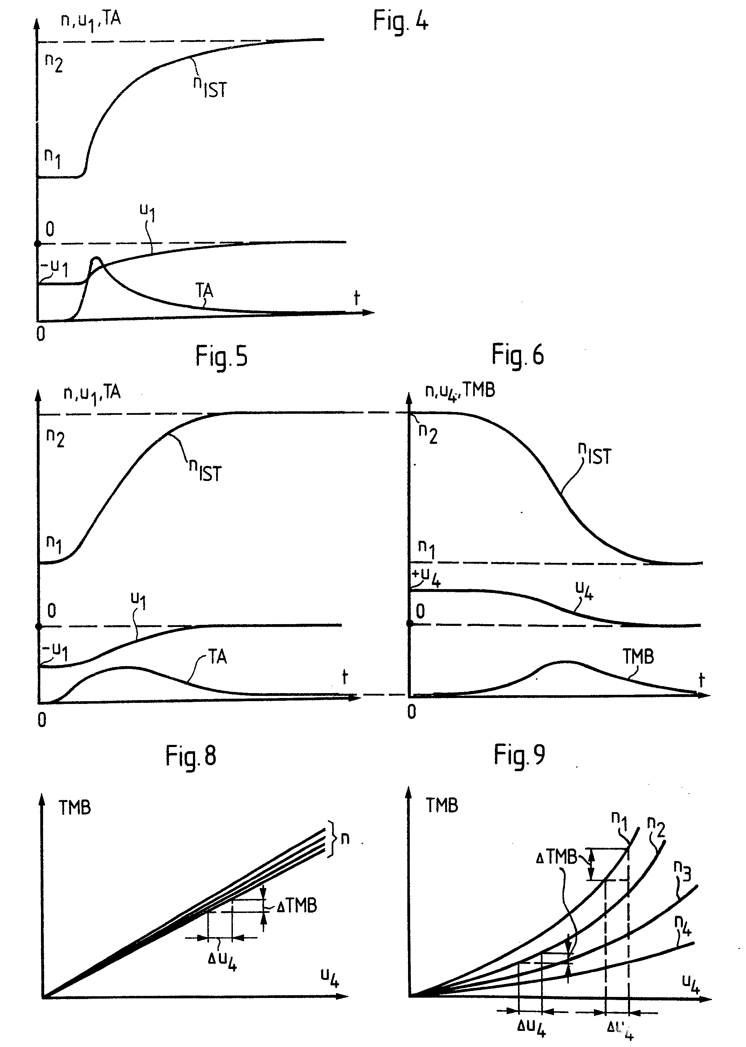

Der Regler 15 gemäss Fig. 2 besteht aus einem Operationsverstärker 31, mit einer aus einem Widerstand 33 gebildeten, P-Verhalten bewirkenden Rückführung. Der invertierende Eingang des Operationsverstärkers 31 ist einerseits über einen Widerstand 34 mit dem Tachometerdynamo 8 und andererseits über einen weiteren Widerstand 35 mit dem Ausgang des Sollwertgebers 16 verbunden. Die Ausgangsspannung $u_1$, $u_4$ des Reglers 15 nimmt während der Beschleunigungsphase einen im negativen Bereich gegen Null ansteigenden und während der Verzögerungsphase einen im positiven Bereich gegen Null abfallenden Verlauf (Fig. 5 und 6).

Das Anpassungsglied 18 gemäss Fig. 3 besteht aus einem Operationsverstärker 36, dessen Rückführung über ein Zeitglied erfolgt, das aus einer Parallelschaltung eines Kondensators 37 und eines Potentiometers 38 gebildet ist. Der nichtinvertierende Eingang des Operationsverstärkers 36 ist über einen Widerstand 39 und das Sperrglied 17 mit dem Ausgang des Reglers 15 und über einen weiteren Widerstand 40 sowie ein weiteres Potentiometer 41 mit dem Minuspol M einer Spannungsquelle verbunden. Durch Einstellen des in der Rückführung angeordneten Potentiometers 38, kann der Drehmomentenverlauf TA und der Drehzahlverlauf $n_{IST}$ der Beschleunigungsphase (Fig. 5) dem Drehmomenten- und Drehzahlverlauf TMB, $n_{IST}$ der Verzögerungsphase (Fig. 6) angepasst werden, so dass eine einer optimalen Fahrkurve nahekommende Fahrkurve erzielbar ist. Ohne das Anpassungsglied 18 würde sich während der Beschleunigungsphase ein relativ stark von der Verzögerungsphase abweichender Kurvenverlauf ergeben (Fig. 4). Mittels des Potentiometers 41 am nichtinvertierenden Eingang des Operationsverstärkers 36 kann die Ausgangsspannung $u_3$ des Anpassungsgliedes 18 derart eingestellt werden, dass ein guter Uebergang der Drehmomenverläufe TA, TMB und der Drehzahlverläufe $n_{IST}$ von der Beschleunigungs- zur Verzögerungsphase erzielbar ist (Fig. 5 und 6).

Das beispielsweise aus einem Funktionsnetzwerk gebildete Linearisierungsglied 19 des Hubmotor-Regelkreises ist eingangsseitig mit dem Ausgang des Anpassungsgliedes 18 und ausgangsseitig mit dem Eingang des Stellgliedes 13, 14 des Hubmotors 1 verbunden (Fig. 1). Das Linearisierungsglied 19 linearisiert durch Bildung einer geeigneten Funktion die statische Beziehung zwischen der Reglerausgangsspannung $u_1$ und den abgegebenen Drehmoment TA des Hubmotors 1, wodurch die Charakteristik eines Gleichstrom-Nebenschlussmotors erzielbar ist. Ausserdem ist, wie aus Fig. 7 ersichtlich, die Streckenverstärkung $\Delta TA/\Delta u_1$ annähernd konstant und unabhängig von der Lage des Arbeitspunktes, so dass auch das Einschwingverhalten annähernd konstant bleibt und unabhängig von Sollwertverschiebungen ist.

Das beispielsweise aus einem weiteren Funktionsnetzwerk gebildete Linearisierungsglied 21 des Regelkreises der Wirbelstrombremse 7 ist über einen ersten Eingang mit dem Tachometerdynamo 8 und über einen zweiten Eingang und das Sperrglied 20 mit dem Ausgang des Reglers 15 verbunden, während sein Ausgang am Eingang des Zweipunktreglers 22 der Wirbelstrombremse 7 angeschlossen ist (Fig. 1). Das Linearisierungsglied 21 linearisiert durch Bildung einer geeigneten Funktion die statische Beziehung zwischen der Reglerausgangsspannung $u_4$ und dem Bremsmoment TMB der Wirbelstrombremse 7, wodurch die Charakteristik eines Gleichstrom-Nebenschlussmotors erzielbar ist. Ausserdem ist ähnlich wie beim Linearisierungsglied 19 des Hubmotor-Regelkreises und der Fig. 7, die Streckenverstärkung ΔTMB/Δu4 annähernd konstant und unabhängig von der Lage des Arbeitspunktes (Fig. 8). Ohne das Linearisierungsglied 21 wäre die Streckenverstärkung bei gleitendem Arbeitspunkt nicht konstant, so dass sich auch das Einschwingverhalten ständig ändern würde (Fig. 9).

Der Zweipunktregler 22 gemäss Fig. 10 besteht aus einem Operationsverstärker 42, dessen Rückführung aus einer Serieschaltung mehrerer Dioden 43 gebildet ist. Der invetierende Eingang des Operationsverstärkers 42 ist einerseits über einen Widerstand 44, das Linearisierungsglied 21 und das Sperrglied 20 am Ausgang des Reglers 15 angeschlossen und andererseits über ein Potentiometer 45 mit dem Stromwandler 27 verbunden (Fig. 1). Die Dioden 43 der Rückführung bewirken, dass die positive Ausgangsspannung $U_R$ des Zweipunktreglers 22 auf die Summe der Durchlassspannungen der Dioden 43 begrenzt bleibt.

Die Triggerschaltung 24 gemäss Fig. 11 besteht aus einem Unijunktion-Transistor 46, dessen Emitter mit einem Kondensator 47 und dem Kollektor eines Transistors 48 verbunden ist und dessen erste Basis B1 mit den Steuerelektroden der Thyristoren 23 in Verbindung steht. Die zweite Basis B2 des Unijunktion-Transistors 46 ist mit dem Pluspol P einer Spannungsquelle verbunden. Die Basis des Transistors 48 ist einerseits über einen Widerstand 49 und eine Diode 50 am Ausgang des Zweipunktreglers 22 und andererseits über eine weitere Diode 51 und einem weiteren Widerstand 52 am Pluspol P der Spannungsquelle angeschlossen, mit welchem auch der Emitter des Transistors 48 in Verbindung steht.

Der Zweipunktregler 22 arbeitet mit der Triggerschaltung 24 während der Verzögerungsphase wie folgt zusammen :

Bei Absinken des Stromistwertes $I_{IST}$ der Erregerwicklung 25 der Wirbelstrombremse 7 unter den Stromsollwert $I_{SOLL}$, schaltet der Zweipunktregler 22, wobei seine Ausgangsspannung $U_R$ schlagartig einen negativen Wert annimmt, (Zeitpunkt $t_1$, Fig. 12). Damit werden die Dioden 50, 51 sowie der Transistor 48 der Triggerschaltung 24 leitend, so dass der Kondensator 47 aufgeladen wird. Erreicht die Kondensatorspannung $U_C$ die Emitter-Scheitelspannung des Unijunktion-Transistors 46, so tritt an dessen Basis B1 ein Impuls auf, mittels welchem der jeweils in Durchlassrichtung gepolte Thyristor 23 gezündet wird. Hierauf beginnt der Stromistwert $I_{IST}$ wieder zu steigen und der Kondensator 47 entlädt sich über den Unijunktion-Transistor 46

(Zeitpunkt $t_2$, Fig. 12). Beim Erreichen des Stromsollwertes $I_{SOLL}$ springt die Ausgangsspannung $U_R$ des Zweipunktregles 22 wieder auf den durch die Dioden 43 der Rückführung begrenzten positiven Wert (Zeitpunkt $t_3$, Fig. 12). Beim Absinken der anliegenden Gleichspannung $U_G$ auf Null wird der gezündete Thyristor 23 gesperrt, so dass der Stromistwert $I_{IST}$ wieder zurückgeht (Zeitpunkt $t_4$, Fig. 12). Auf diese Weise wird je nach Grösse des Stromsollwertes $I_{SOLL}$ die Durchflusszeit der Thyristoren 23 gesteuert, wobei sich ein dem Stromsollwert $I_{SOLL}$ folgender mittlerer Stromistwert $I_{IST}$ ergibt und das Bremsmoment der Wirbelstrombremse 7 entsprechend beeinflusst wird.

Der vorzugsweise verwendete, aus der europäischen Patentanmeldung 0 026 406 bekannte Sollwertgeber 16 besteht aus einem Steuerspeicher in Form eines programmierbaren Festwertspeichers und aus drei, mittels eines Mikroprozessors realisierten Summierstufen. Im Steuerspeicher sind zulässige Ruckwerte sowie Grenzwerte der Beschleunigung und Geschwindigkeit sowohl für die Beschleunigungsals auch für die Verzögerungsphase gespeichert. In den Summierstufen wird durch numerische Integration die Beschleunigung, die Geschwindigkeit und der Weg ermittelt. Der in dieser Weise ab Fahrtbeginn gebildete Wegsollwert $s_{SOLL}$ wird, wie in der Fig. 1 schematisch dargestellt, mit einem von einem Digitaltachometer 53 erzeugten Wegistwert $s_{IST}$ verglichen, wobei der Digitaltachometer 53 von der Aufzugskabine 6 vorzugsweise über einen Geschwindigkeitsbegrenzer 54 angetrieben wird. Die aus dem Vergleich resultierende Regelabweichung Δs wird über einen D/A-Wandler 55 dem Regler 15 als Drehzahlsollwert $n_{SOLL}$ zugeführt. Zwecks Einleitung der Verzögerungsphase arbeitet der Sollwertgeber mit einer ebenfalls aus der europäischen Patentanmeldung 0 026 406 bekannten Stoppeinleitungseinrichtung zusammen. Hierbei wird ein der jeweiligen Selektorstellung zugeordneter Zielweg mit einem in der Stoppeinleitungseinrichtung erzeugten möglichen Zielweg verglichen, wobei bei Gleichheit der Wege und Vorliegen einer Haltbestimmung der Stopp eingeleitet wird und in Abhängigkeit von den zulässigen negativen Ruck- und Beschleunigungswerten fortlaufend zunehmende Wegsollwerte $s_{SOLL}$ erzeugt werden, bis der Zielweg erreicht ist.

Anstelle der im Beispiel beschriebenen Ausführung in Analogtechnik, kann die im Anspruch 1 gekennzeichnete Antriebssteuerung auch in Digitaltechnik, beispielsweise mittels eines Mikrocomputers realisiert werden, welcher die Funktionen der Regler 15, 22, der Sperrglieder 17, 20, des Anpassungsgliedes 18 und der Linearisierungsglieder 19, 21 übernehmen kann.

**Patentansprüche**

1. Antriebssteuerung für einen Aufzug mit einem Hubmotor (1) der mit einer Wirbelstrombremse (7) und einem Tachometer (8) gekuppelt ist, wobei die Antriebssteuerung einen Sollwertgeber (16) und einen Regler (15) aufweist, welcher eingangsseitig mit dem Tachometer (8) und ausgangsseitig mit einem Stellglied (13, 14) für die Steuerung des Antriebsdrehmomentes des Hubmotors (1) sowie mit einem Stellglied (23, 24) für die Steuerung des Bremsdrehmomentes der Wirbelstrombremse (7) verbunden ist, und wobei der Sollwertgeber (16) für die Beschleunigung einen zunehmenden und für die Verzögerung einen abnehmenden Sollwert erzeugt und der Fahrtverlauf des Aufzuges abhängig von der dem Regler (15) zugeführten, aus der Differenz des Sollwertes und des vom Tachometer (8) erzeugten Istwertes gebildeten Regelabweichung regelbar ist, dadurch gekennzeichnet, dass im Regelpfad zwischen dem Regler (15) und dem Stellglied (13, 14) des Hubmotores (1) ein Sperrglied (17) für die Sperrung der Regelung des Hubmotors (1), ein den Drehmomenten- und Drehzahlverlauf der Beschleunigungsphase angenähert an den Bremsmoment- und Drehzahlverlauf der Verzögerungsphase anpassendes Anpassungsglied (18) und ein Linearisierungsglied (19) angeordnet sind, und dass im Regelpfad zwischen dem Regler (15) und dem Stellglied (23, 24) der Wirbelstrombremse (7) ein weiteres Sperrglied (20) für die Sperrung der Regelung der Wirbelstrombremse (7), ein weiteres Linearisierungsglied (21) und ein weiterer Regler (22) vorgesehen sind, wobei eine Rückführung vorgesehen ist, über welche der ermittelte Strom der Erregerwicklung (25) der Wirbelstrombremse (7) dem weiteren Regler (22) zugeführt wird.

2. Antriebssteuerung nach Patentanspruch 1, dadurch gekennzeichnet, dass der Regler (15) ein P-Regler ist, der wie an sich bekannt aus einem Operationsverstärker (31) besteht, dessen Rückführung aus einem Widerstand (33) gebildet ist, und dessen invertierender Eingang über je einen weiteren Widerstand (34, 35) mit dem Ausgang des Sollwertgebers (16) und dem Tachometerdynamo (8) verbunden ist, und dessen Ausgang sowohl am Regelpfad des Hubmotors (1) als auch am Regelpfad der Wirbelstrombremse (7) angeschlossen ist.

3. Antriebssteuerung nach Patentanspruch 1, dadurch gekennzeichnet, dass die Sperrglieder (17, 20) aus je einem Spannungsteiler (28, 29) und je einer Diode (30) bestehen, wobei bei dem einen Sperrglied (17) die Mittelanzapfung des Spannungsteilers (28, 29) mit der Anode der Diode (30) und bei dem weiteren Sperrglied (20) die Mittelanzapfung des Spannungsteilers (28, 29) mit der Kathode der Diode (30) in Verbindung steht, so dass bei negativer Ausgangsspannung $u_1$ des Reglers (15) die Regelung der Wirbelstrombremse (7) und bei positiver Ausgangsspannung $u_4$ des Reglers (15) die Regelung des Hubmotors (1) gesperrt ist.

4. Antriebssteuerung nach Patentanspruch 1, dadurch gekennzeichnet, dass der weitere Regler (22) ein Zweipunktregler ist, der aus einem Operationsverstärker (42) besteht, dessen Rückführung aus einer Serieschaltung mindestens einer Diode (43) gebildet ist, wobei der invertierende Eingang des Operationsverstärkers (42) über ein Potentiometer (45) mit dem Stromwandler (27), und über einen Widerstand (44) mit dem Ausgang des weiteren Linearisierungsgliedes (21) verbunden ist.

5. Antriebssteuerung nach Patentanspruch 1 oder 4, dadurch gekennzeichnet, dass das Stellglied der Wirbelstrombremse (7) eine Triggerschaltung (24) aufweist, in welcher ein Transistor (48) vorgesehen ist, dessen Basis über einen Widerstand (49) und eine Diode (50) mit dem Ausgang des Zweipunktreglers (22) verbunden ist, und dessen Kollektor mit dem Emitter eines Unijunktion-Transistors (46) und einem Kondensator (47) in Verbindung steht.

6. Antriebssteuerung nach Patentanspruch 1, dadurch gekennzeichnet, dass das Anpassungsglied (18) aus einem Operationsverstärker (36) besteht, dessen Rückführung aus einer Parallelschaltung eines Kondensators (37) und eines Potentiometers (38) gebildet ist, wobei der nichtinvertierende Eingang des Operationsverstärkers (36) über einen Widerstand (39) und das eine Sperrglied (17) mit dem Ausgang des Reglers (15), und über einen weiteren Widerstand (40) und ein weiteres Potentiometer (41) mit dem Minuspol (M) einer Spannungsquelle verbunden ist.

7. Antriebssteuerung nach Patentanspruch 1, dadurch gekennzeichnet, dass der vom Sollwertgeber (16) abgegebene Drehzahlsollwert ($n_{SOLL}$) die aus der Differenz eines Wegsollwertes ($s_{SOLL}$) und eines Wegistwertes ($s_{IST}$) gebildete Regelabweichung ($\Delta s$) ist, wobei der Sollwertgeber (16) sowohl während der Beschleunigungsphase als auch während der Verzögerungsphase von zulässigen Ruck- und Beschleunigungswerten abhängige Wegsollwerte ($s_{SOLL}$) erzeugt.

## Claims

1. Drive control for a lift with a hoist motor (1), which is coupled with an eddy current brake (7) and a tachometer (8), wherein the drive control displays a target value generator (16) and a regulator (15), which is connected at the input side with the tachometer (8) and at the output side with a setting member (13, 14) for the control of the driving torque of the hoist motor (1) as well as with a setting member (23, 24) for the control of the braking torque of the eddy current brake (7), and wherein the target value generator (16) generates an increasing target value for the acceleration and a decreasing target value for the deceleration and the travel course of the lift is regulable in dependence on the regulating deviation which is formed from the difference between the target value and the actual value generated by the tachometer (8) and which is conducted to the regulator (8), characterised thereby, that a blocking member (17) for the blocking of the regulation of the hoist motor (1), a matching member (18) matching the course of torque and rotational speed of the acceleration phase approximately to the course of torque and rotational speed of the deceleration phase and a linearising member (19) are arranged in the regulating path between the regulator (15) and the setting member (13, 14) of the hoist motor (1) and that a further blocking member (20) for the blocking of the regulation of the eddy current brake (7), a further linearising member (21) and a further regulator (22) are provided in the regulating path between the regulator (15) and the setting member (23, 24) of the eddy current brake (7), wherein a feedback path is provided, by way of which the ascertained current of the exciter winding (25) of the eddy current brake (7) is conducted to the further regulator (22).

2. Drive control according to patent claim 1, characterised thereby, that the regulator (15) is a proportional regulator which as in itself known consists of an operational amplifier, the feedback path of which is formed by a resistor (33) and the inverting input of which is connected through a respective further resistor (33, 34) with the output of the target value generator (16) and the tachometer dynamo (8) and the output of which is connected to the regulating path of the hoist motor (1) as well as to the regulating path of the eddy current brake (7).

3. Drive control according to patent claim 1, characterised thereby, that the blocking members (17, 20) each consist of a respective voltage divider (28, 29) and a respective diode (30), wherein the centre tap of the voltage divider (28, 29) in the one blocking member (17) stands in connection with the anode of the diode (30) and the centre tap of the voltage divider (28, 29) in the further blocking member (20) stands in connection with the cathode of the diode (30) so that the regulation of the eddy current brake (7) is blocked in the case of negative output voltage $u_1$ of the regulator (15) and the regulation of the hoist motor (1) is blocked in the case of positive output voltage $u_4$ of the regulator (15).

4. Drive control according to patent claim 1, characterised thereby, that the further regulator (22) is a two-point regulator which consists of an operational amplifier (42), the feedback path of which is formed by a series connection of at least a diode (43), wherein the inverting input of the operational amplifier (42) is connected through a potentiometer (45) with the current converter (27) and through a resistor (44) with the output of the further linearising member (21).

5. Drive control according to patent claim 1 or 4, characterised thereby, that the setting member of the eddy current brake (7) displays a trigger circuit (24), in which a transistor (48) is provided, the base of which is connected through a resistor (49) and a diode (50) with the output of the two-point regulator (22) and the collector of which stands in connection with the emitter of a unijunction transistor (46) and a capacitor (47).

6. Drive control according to patent claim 1, characterised thereby, that the matching member (18) consists of an operational amplifier (36), the feedback path of which is formed by a parallel connection of a capacitor (37) and a potentiometer (38), wherein the non-inverting input of the operational amplifier (36) is connected through a resistor (39) and the one blocking member (17) with the output of the regulator (15) and through a further resistor (40) and a further potentiometer (41) with the negative pole (M) of a voltage source.

7. Drive control according to patent claim 1, characterised thereby, that the rotational speed target value ($n_{SOLL}$) delivered by the target value generator (16) is the regulating deviation ($\Delta s$) formed from the difference of a travel target value ($s_{SOLL}$) and a travel actual value ($s_{IST}$), wherein the target value generator (16) generates travel target values ($s_{SOLL}$) dependent on permissible values of jolt and acceleration during the acceleration phase as well as during the deceleration phase.

**Revendications**

1. Commande de l'entraînement d'un ascenseur au moyen d'un moteur de levage (1) accouplé à un frein à courants de Foucault (7) et à un tachymètre (8), commande qui comporte un générateur de valeurs de consigne (16) et un régulateur (15) relié, côté entrée, au tachymètre (8) et, côté sortie, à un organe de réglage (13, 14) pour la commande du couple d'entraînement du moteur de levage (1) ainsi qu'à un organe de réglage (23, 24) pour la commande du couple de freinage du frein à courants de Foucault (7), le générateur de valeurs de consigne (16) engendrant une valeur de consigne croissante pour l'accélération et une valeur de consigne décroissante pour le ralentissement, et le déroulement de la course de l'ascenseur étant réglable en dépendance de l'écart de réglage établi à partir de la différence entre la valeur de consigne et la valeur effective engendrée par le tachymètre (8) et amené au régulateur (15), caractérisée en ce que dans le trajet de réglage entre le régulateur (15) et l'organe de réglage (13, 14) du moteur de levage (1) sont disposés un organe de blocage (17) pour bloquer le réglage du moteur de levage (1), un organe adaptateur (18) qui adapte de manière approchée l'évolution du couple moteur et de la vitesse de rotation de la phase d'accélération à l'évolution du couple de freinage et de la vitesse de rotation de la phase de ralentissement, et un organe de linéarisation (19), et en ce que dans le trajet de réglage entre le régulateur (15) et l'organe de réglage (23, 24) du frein à courants de Foucault (7) sont prévus un autre organe de blocage (20) pour bloquer le réglage du frein à courants de Foucault (7), un autre organe de linéarisation (21) et un autre régulateur (22), un asservissement étant prévu, par l'intermédiaire duquel le courant de l'enroulement d'excitation (25) du frein à courants de Foucault (7) est amené à l'autre régulateur (22).

2. Commande d'entraînement selon la revendication 1, caractérisée en ce que le régulateur (15) est un régulateur proportionnel qui, comme connu en soi, consiste en un amplificateur opérationnel (31), amplificateur dont l'asservissement est formé par une résistance (33) et dont l'entrée inversante est respectivement reliée à la sortie du générateur de valeurs de consigne (16) et au tachymètre (8) par l'intermédiaire d'une autre résistance (34, 35), alors que la sortie est raccordée au trajet de réglage du moteur de levage (1) aussi bien qu'au trajet de réglage du frein à courants de Foucault (7).

3. Commande d'entraînement selon la revendication 1, caractérisée en ce que les organes de blocage (17, 20) sont constitués chacun d'un diviseur de tension (28, 29) et d'une diode (30), la prise médiane du diviseur de tension (28, 29) étant, dans l'un des organes de blocage (17), en liaison avec l'anode de la diode (30) respective et, dans l'autre organe de blocage (20), en liaison avec la cathode de la diode (30) respective, de sorte que le réglage du frein à courants de Foucault (7) est bloqué lors d'une tension de sortie négative $u_1$ du régulateur (15) et que le réglage du moteur de levage (1) est bloqué lors d'une tension de sortie positive $u_4$ du régulateur (15).

4. Commande d'entraînement selon la revendication 1, caractérisée en ce que l'autre régulateur (22) est un régulateur à deux paliers consistant en un amplificateur opérationnel (42) dont l'asservissement est formé à partir d'un montage en série d'au moins une diode (43), l'entrée inversante de l'amplificateur opérationnel (42) étant reliée au transformateur de courant (27) par l'intermédiaire d'un potentiomètre (45) et à la sortie de l'autre organe de linéarisation (21) par l'intermédiaire d'une résistance (44).

5. Commande d'entraînement selon la revendication 1 ou la revendication 4, caractérisée en ce que l'organe de réglage du frein à courants de Foucault (7) comporte un montage de déclenchement (24) dans lequel est prévu un transistor (48), transistor dont la base est reliée à la sortie du régulateur à deux paliers (22) par l'intermédiaire d'une résistance (49) et d'une diode (50) et dont le collecteur est en liaison avec l'émetteur d'un transistor unijonction (46) et avec un condensateur (47).

6. Commande d'entraînement selon la revendication 1, caractérisée en ce que l'organe adaptateur (18) consiste en un amplificateur opérationnel (36) dont l'asservissement est formé par un montage en parallèle d'un condensateur (37) et d'un potentiomètre (38), l'entrée non inversante de l'amplificateur opérationnel (36) étant reliée à la sortie du régulateur (15) par l'intermédiaire d'une résistance (39) et de l'organe de blocage respectif (17) et reliée au pôle négatif (M) d'une source de tension par l'intermédiaire d'une autre résistance (40) et d'un autre potentiomètre (41).

7. Commande d'entraînement selon la revendication 1, caractérisée en ce que la valeur de consigne de vitesse de rotation ($n_{SOLL}$) délivrée par le générateur de valeurs de consigne (16) est l'écart de réglage ($\Delta s$) formé à partir de la différence entre une valeur de consigne de trajet ($s_{SOLL}$) et une valeur effective de trajet ($s_{IST}$), le générateur de valeurs de consigne (16) engendrant des valeurs de consigne de trajet ($s_{SOLL}$) dépendantes de valeurs admissibles d'à-coups et d'accélération aussi bien durant la phase d'accélération que durant la phase de ralentissement.

0 094 109

Fig. 1

Fig. 7

1

Fig 2

Fig. 3

$n_{SOLL}$

33

35

34

31

$u_1$
$u_4$

15

$n_{IST}$

41

37

40

38

36

M

$u_1$

39

$u_3$

18

Fig. 10

Fig. 11

43

44

45

42

$I_{SOLL}$

$U_R$

$I_{IST}$

22

P

52

51

50

48

46

B2

49

47

$U_C$

B1

$U_R$

24

Fig. 12

$U_G$

t

$I_{IST}$

$I_{SOLL}$

t

$t_3$

$t_4$

$U_R$

t

$U_C$

$t_1$

$t_2$

t

Fig. 4

Fig. 5

Fig. 6

Fig. 8

Fig. 9